(19) Europäisches Patentamt
European Patent Office
Office européen des brevets

(11) **EP 1 906 163 A1**

(12) **EUROPÄISCHE PATENTANMELDUNG**

(43) Veröffentlichungstag:
**02.04.2008 Patentblatt 2008/14**

(51) Int Cl.:
***G01K 7/42*** *(2006.01)*

(21) Anmeldenummer: **07018244.9**

(22) Anmeldetag: **18.09.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK YU**

(30) Priorität: **26.09.2006 DE 102006045381**

(71) Anmelder: **ROBERT BOSCH GMBH**
**70442 Stuttgart (DE)**

(72) Erfinder:
• **Bitzer, Matthias, Dr.**
**70569 Stuttgart (DE)**
• **Kreuzinger, Tobias**
**70499 Stuttgart (DE)**

(54) **Ermittlungsverfahren eines Beladungszustandes einer Schichtladespeichervorrichtung sowie Schichtladespeichervorrichtung**

(57) Der Gegenstand der vorliegenden Erfindung betrifft ein Computerprogramm, ein Computerprogrammprodukt ein Regelungsverfahren und ein Verfahren zur Ermittlung nicht messbarer Zustände eines Systems, insbesondere eines Beladungszustandes einer mit einem Fluid zumindest teilweise befüllten Speicherzelle eines Schichtladespeichers (1), umfassend die Schritte: Abbilden des Systems, insbesondere des Schichtladespeichers (1), in einem Modell, Messen von messbaren Zustandsgrößen des Systems, insbesondere von messbaren Zustandsgrößen des in dem Schichtladespeicher (1) befindlichen Fluids, Bestimmen des nicht messbaren Zustands des Systems anhand des Modells und der gemessenen messbaren Zustandsgrößen, wobei das Bestimmen des nicht messbaren Zustands mittels einem Schätzverfahren erfolgt, in welchem ein Beobachter- und/oder Filterverfahren angewendet wird. Zudem betrifft die vorliegende Erfindung eine Schichtladespeichervorrichtung mit einer Speicherzelle für ein Fluid, insbesondere einer Speicherzelle für ein Heiz- oder Warmwassergerät, umfassend eine Regeleinrichtung mit Mitteln zur Ermittlung nicht messbarer Zustände, insbesondere eines Beladungszustandes wie einem Temperaturprofil des Fluids in der Speicherzelle.

Fig. 1

Printed by Jouve, 75001 PARIS (FR)

EP 1 906 163 A1

## Beschreibung

Die Erfindung betrifft ein Verfahren zur Ermittlung nicht messbarer Zustände eines Systems gemäß dem Oberbegriff von Anspruch 1, ein Regelungsverfahren gemäß dem Oberbegriff des Anspruchs 7, ein Computerprogramm gemäß dem Oberbegriff des Anspruchs 9, ein Computerprogrammprodukt gemäß dem Oberbegriff des Anspruchs 10 und eine Schichtladespeichervorrichtung gemäß dem Oberbegriff des Anspruchs 11.

Um warmes oder heißes Wasser für verschiedene Zwecke wie Heizen und dergleichen bereitzustellen, wird Wasser als ein Fluid in Heiz- und Warmwassergeräten mit entsprechenden Speichern oder Warmwasserspeichern gelagert und/oder aufbereitet. Um die Energiekosten gering zu halten und einen hohen Komfort bei der Bereitstellung des Wassers zu gewährleisten, wird in neueren, meist indirekt beheizten Warmwasserspeichern, eine Schichtladetechnologie verwendet. Diese bieten gegenüber älteren Warmwassergeräten die Vorteile einer modernen Brennwerttechnik sowie den Vorteil deutlich kleinerer Speicherabmessungen und daraus resultierend kürzere Aufheizzeiten. Zudem sind Warmwassergeräte mit Schichtladetechnologie umweltverträglicher.

Die heutigen Warmwassergeräte weisen für die Bereitstellung von Warmwasser eine Prozessführungseinrichtung auf. Jedoch weisen die heute existierenden Prozessführungseinrichtungen der Warmwassergeräte eine einfache Regelung mit zwei Temperatursensoren zur örtlich diskreten Messung der Wassertemperatur auf. Hiermit lassen sich nur örtlich diskrete, messbare Zustandsgrößen des Wassers wie zum Beispiel die Wassertemperatur ermitteln. Somit sind diese Prozessführungseinrichtungen nicht für moderne, zukünftige und energieoptimierte Prozessführungseinrichtungen mit entsprechenden höheren Anforderungen an die Prozessführung ausgelegt.

Der Erfindung liegt die Aufgabe zugrunde, ein Verfahren zu schaffen, welches eine Ermittlung nicht messbarer Zustände eines Fluids in einer Speicherzelle wie zum Beispiel das Temperaturprofil des Fluids ermöglicht, um eine verbesserte und energieoptimierte Prozessführung zu gewährleisten.

Erfindungsgemäß wird dies mit den Merkmalen des Anspruchs 1 gelöst.

Der Erfindung liegt weiter die Aufgabe zugrunde, ein Beobachter-/Filterverfahren für einen Schichtladespeicher insbesondere eines Warmwassergeräts bereitzustellen, welches das Verfahren zur Ermittlung nicht messbarer Zustände eines Fluids in einer Speicherzelle wie zum Beispiel das Temperaturprofil des Fluids ermöglicht, um damit eine verbesserte Füllstandsschätzung für zum Beispiel Wassererwärmer durchzuführen und um damit dann weiterhin eine energieoptimierte Regelung durch die Prozessführung zu ermöglichen.

Erfindungsgemäß wird dies mit den Merkmalen des Anspruchs 7 gelöst.

Der Erfindung liegt zudem die Aufgabe zugrunde, ein Computerprogramm und ein Computerprogrammprodukt zum Ablauf eines Verfahrens und eines Beobachtungs-/Regelungsverfahrens zur Ermittlung nicht messbarer Zustände eines Fluids in einer Speicherzelle wie zum Beispiel das Temperaturprofil des Fluids zu schaffen, um eine computerbasierte, verbesserte und energieoptimierte Prozessführung zu ermöglichen.

Erfindungsgemäß wird dies durch ein Computerprogramm bzw. ein Computerprogrammprodukt mit den Merkmalen des Anspruchs 9 bzw. Anspruchs 10 gelöst.

Der Erfindung liegt darüber hinaus die Aufgabe zugrunde, eine Schichtladespeichervorrichtung zu schaffen, welche eine optimierte, an die höheren Anforderungen angepasste Prozessführung aufweist.

Erfindungsgemäß wird dies mit den Merkmalen des Anspruchs 11 gelöst.

Weitere Hauptmerkmale der Erfindung sind in den Ansprüchen 1, 7, 9, 10 und 11 angegeben. Ausgestaltungen sind Gegenstand der Ansprüche 2 bis 6, 8 und 12.

Die Erfindung schließt die technische Lehre ein, dass ein Verfahren zur Ermittlung eines nicht messbaren Zustandes eines Systems, insbesondere eines Beladungszustandes einer mit einem Fluid zumindest teilweise befüllten Speicherzelle eines Schichtladespeichers, wie einem Temperaturprofil eines Fluids in einer Speicherzelle eines Schichtladespeichers, die Schritte umfasst: Abbilden des Systems, insbesondere des Schichtladespeichers, in einem Modell, Messen von messbaren Zustandsgrößen des Systems, insbesondere von messbaren Zustandsgrößen des in dem Schichtladespeicher befindlichen Fluids, Bestimmen der nicht messbaren Zustände des Fluids anhand des Modells und der gemessenen messbaren Zustandsgrößen, wobei das Bestimmen des nicht messbaren Zustands mittels einem Schätzverfahren erfolgt, in welchem ein Beobachter- oder Filterverfahren angewendet wird.

Unter einem nicht messbaren Zustand wird dabei ein Zustand verstanden, der nicht durch eine begrenzte Anzahl an Sensoren und dergleichen im Wesentlichen vollständig erfassbar ist, wenn also die Anzahl der Sensoren nicht ausreicht, einen Zustand vollständig zu erfassen oder der Zustand einfach zu komplex für eine Erfassung ausgebildet ist. Ein solcher Zustand ist beispielsweise das Temperaturprofil eines Fluids wie Wasser in einer Speicherzelle eines Schichtladespeichers. Allgemein wird das Temperaturprofil des Wassers oder Fluids auch unter dem Begriff Beladungszustand gefasst. Vielmehr werden mit der begrenzten Anzahl an Sensoren meist nur wenige Zustandsgrößen erfasst. Der Zustand kann dabei ein örtlicher, örtlich verteilter und/oder zeitlich verteilter Zustand sein.

Ein Schichtladespeicher, insbesondere ein Schichtladespeicher für Warmwassergeräte wird dabei so betrieben, dass der Benutzer Warmwasser aus einer Speicherzelle entnehmen kann. In der Speicherzelle ist das warme Wasser vorrätig, wobei sich das wärmere Wasser, aufgrund seiner geringeren Dichte gegenüber kälterem Wasser, in der Speicherzelle an einer höheren Stelle als das kältere Wasser befindet. Aufgrund dieser Dichteunterschiede liegt zum Beispiel ein Temperaturprofil des Wassers vor. Das warme oder heiße Wasser wird entsprechend an einer oberen Stelle der Speicherzelle entnommen.

Um nun das erwünschte warme oder heiße Wasser bereitzustellen, ist eine Prozessführung erforderlich. Um eine geeignete energieoptimierte Prozessführung zu realisieren, wird der aktuelle, zeitabhängige Zustand der Temperaturverteilung des Schichtladespeichers benötigt. Dieser wird mit einem Beobachter-/Filterverfahren geschätzt. Zur Realisierung des Beobachter-/Filterverfahrens wird zuerst ein Modell des Schichtladespeichers einschließlich der Speicherzelle abgebildet. Je genauer der reale Prozess in ein Modell abgebildet wird, desto besser kann die Beobachtung/Schätzung des Temperaturprofils und damit die Prozessführung erfolgen und desto effizienter arbeitet der Schichtladespeicher. Ein physikalisches Modell innerhalb eines Beobachters/Beobachterverfahrens wird auch als Simulator oder Simulatorteil eines Beobachters bezeichnet.

Um die Prozessführung zu optimieren, ist es erforderlich, den mit der Prozessführung zu regelnden Zustand möglichst genau zu erfassen.

In der Realität lassen sich nicht alle Zustände komplett erfassen, da entweder die Zustände zu komplex sind oder die Anzahl der Sensoren aus technischen oder wirtschaftlichen Gründen begrenzt ist.

In gängigen Schichtladespeichern sind meist nur wenige Sensoren vorhanden. In der Regel sind an einer Speicherzelle nur zwei Sensoren angeordnet. Mit dieser begrenzten Anzahl an Sensoren lässt sich der Zustand eines in der Speicherzelle angeordneten Fluids wie Wasser nicht komplett erfassen. Es ist somit eine modellbasierte Zustandsschätzung erforderlich. Das Modell ist beispielsweise eine vereinfachte makromatische Beschreibung der Physik der Speicherzellen.

Anhand des Modells und der gemessenen Zustandswerte wird nun der nicht messbare Zustand bestimmt. Dies erfolgt in der vorliegenden Erfindung mit Hilfe eines Schätzverfahrens. Hierbei wird durch einen Abgleich der gemessenen Zustandswerte und den entsprechenden Größen des Modells ein sogenannter Korrekturterm erzeugt. Dieser wird mit dem Modell gekoppelt und ein so gebildeter Regelkreis wird so geregelt, dass die gemessenen Zustandswerte und die Modellwerte schnell konvergieren. Auf diese Weise kann ein nicht messbarer Zustand anhand weniger Messwerte und/oder weniger Sensoren schnell bestimmt werden.

Für den Entwurf der Schätzverfahren werden insbesondere Beobachterverfahren und/oder Filterverfahren angewendet. Mit diesen Verfahren lässt sich für nicht messbare Zustände, wie vorliegend, ein Temperaturprofil rekonstruieren.

Eine Ausführungsform sieht vor, dass ein Beobachterentwurf für das Beobachterverfahren mit einem örtlich verteilten Modell für ein verteiltes System ausgeführt wird. Bei einem Beobachterverfahren oder bei einem Beobachterentwurf als Teil eines Beobachterverfahrens ist die Modellstruktur eines zugrunde liegenden Modells zu berücksichtigen, wobei man in diesem Verfahren zwischen verteilten Systemen und konzentrierten Systemen unterscheidet.

Kennzeichnend für verteilte Systeme ist, dass sich diese z. B. in der Systemtheorie durch partielle Differenzialgleichungen beschreiben lassen, wohingegen konzentrierte Systeme durch gewöhnliche Differenzialgleichungen beschrieben werden. Durch Anwendung sowohl des verteilten Beobachters als auch des konzentrierten Beobachters, einzeln oder in Kombination, lässt sich der nicht messbare Zustand rekonstruieren. Ein systemtheoretischer Ansatz zur Rekonstruktion des Zustandes auf Basis des diskretisierten Modells kann zum Beispiel mittels "Unscented Kalman Filter durchgeführt werden.

Entsprechend sieht eine andere Ausführungsform vor, dass das Beobachterverfahren als ein Beobachterverfahren entsprechend "Luenberger-Beobachter" für ein verteiltes System ausgeführt wird.

Durch die genaue Bestimmung eines Zustandes, hier des Temperaturprofils in der Speicherzelle auf Basis von wenigen Sensoren, zum Beispiel drei Sensoren, wird eine gravierende Verbesserung hinsichtlich der Prozessführung erreicht. Dies wird insbesondere durch die vorgenannten Verfahren erreicht. Neben der exakten Bestimmung eines nicht messbaren Zustands lässt sich das erfindungsgemäße Schätzverfahren für eine Speicherzelle auch für eine exakte Füllstandsmessung der Speicherzelle anwenden. Gegenüber bekannten Modellen, die auf neuronalen Netzen beruhen, ist das erfindungsgemäße Schätzverfahren für die Speicherzelle dahingehend vorteilhaft, dass eine schnellere Anpassung auf neue Speicherzellen mit entsprechenden Parametern möglich ist.

Anhand eines Ausführungsbeispiels der Erfindung, genauer einer Speicherzelle eines Warmwassergeräts lässt sich die Funktionsweise des Verfahrens wie folgt beschreiben. In dem ersten Schritt a) werden die wichtigsten Abläufe in der Speicherzelle in einem Modell abgebildet. Diese Abläufe umfassen zum Beispiel die Veränderung des Temperaturprofils (zum Beispiel in axialer Richtung) durch Auskühlen, Be- und Entladevorgänge und dergleichen. Das abgebildete Modell des Schichtladespeichers wird, da hier diskrete Ereignisse auftreten, die jeweils mit einer kontinuierlichen Dynamik unterlegt sind, als ein hybrides Modell bezeichnet. Die zu diskreten Zeitpunkten stattfindenden Zustandsübergänge von einem diskreten Zustand in den anderen diskreten Zustand sowie die Zustände wie Ruhezustand, Abzapfung, Beladung und die Mischform, bei der zum Beispiel Beladung und Zapfung gleichzeitig stattfinden, werden in einem sogenannten Zustandsautomaten abgebildet oder erfasst. Das Modell, in welchem die kontinuierlichen Zustände abgebildet werden, wird durch ein sogenanntes verteilparametrisches Modell beschrieben. Dieses Modell lässt sich durch partielle Differenzialgleichungen beschreiben, wie vorstehend erwähnt. Die partielle Differenzialgleichung sowie die Rand- und Anfangsbedingung sind im Folgenden aufgeführt. Für die partielle Differenzialgleichung gilt:

$$\rho c \frac{\partial T}{\partial t} = \lambda_W(T)\frac{\partial^2 T}{\partial z^2} - \rho c u(t)\frac{\partial T}{\partial t} - \frac{4k_W(T,u)}{d_i}\Delta T; \qquad z \in (0,1), t = t_k^{l_1 l_2}$$

Für die Randbedingungen gelten:

oben

$$0 = \lambda_W(T)\frac{\partial T}{\partial z} - \rho c(u(t))(T - T_{in}^0) - u_2(t)(T_{in}^0 - T)) - k_{ceil}\Delta T \qquad z = 0, t > t_k^{l4l3}$$

unten

$$0 = \lambda_W(T)\frac{\partial T}{\partial z} - \rho c u_3(t)(T_{in}^4 - T) + k_{bot}\Delta T \qquad z = 1, t > t_k^{l4l3}$$

Für die Anfangsbedingung gilt:

$$T(0, t_k^{l4l3} = T_0(z) \qquad z \in [0,1]$$

Hierbei beschreibt T das Temperaturprofil abhängig von der örtlichen Variable z (in axiale Richtung) und der zeitlichen Variable t. Die Koeffizienten u und $u_n$, n=2, 3 beschreiben die entsprechenden Strömungsgeschwindigkeiten innerhalb der Speicherzelle bzw. in den Zu- und Abflussleitungen des Speichers. Des Weiteren beschreibt $\lambda$ die Wärmeleitung in Wasser, $\rho$ die Dichte von Wasser und c die entsprechende Wärmekapazität des Wassers. Die Variablen $k_{ceil}$ und $k_{bot}$ stellen einen Faktor für den Temperaturunterschied im oberen Bereich (Index ceil) bzw. im unteren Bereich (Index bot) dar. $T_0(z)$ entspricht der Anfangstemperatur (Index 0) der Zulauftemperatur $T_{jn}$, also der Eintrittstemperatur an Rädern (Index in).
Allgemein gilt das folgende Modell:

$$\frac{\partial T}{\partial t} = f\left(\frac{\partial^2 T}{\partial z^2}, \frac{\partial^2 T}{\partial z}, T, u\right)$$

Genauer wird für die Ermittlung des Zustandes das folgende Vorgehen verwendet. Es werden zwei im Folgenden beispielhaft aufgeführte Schritte kombiniert. Der erste Schritt betrifft ein Verfahren zur örtlichen Diskretisierung des Modells, dargestellt durch die partielle Gleichung des allgemeinen Modells. Durch diese Diskretisierung lässt sich das Verfahren auf einem beliebigen Steuergerät oder einer beliebigen Recheneinheit implementieren. Der zweite Schritt betrifft die Verfahren zur Schätzung des Temperaturprofils in der Speicherzelle. Wie beschrieben werden hierfür ein Filter- bzw. ein Beobachterentwurf benötigt.
Besonders bevorzugt ist, dass nun der Schritt Bestimmen des nicht messbaren Zustands" weiter eine Ortsdiskretisierung des örtlich verteilten Modells umfasst.
Die Vorgehensweisen sind folgende:
Das allgemeine Modell des Schichtladespeichers wird direkt verwendet, um ein Schätzverfahren zu entwerfen. Die notwendige Ortsdiskretisierung erfolgt dann nach dem durchgeführten Beobachterentwurf. Alternativ kann das allgemeine Modell zuerst ortsdiskretisiert werden und dann kann unter Verwendung dieses diskretisierten Modells ein Beobachter entworfen werden.

In dem ersten Fall werden örtlich verteilte Beobachter-Entwurfsverfahren angewendet. In dem zweiten Fall werden sogenannte Zustandsbeobachter oder auch (Kalman-)FilterVerfahren verwendet.

Eine Ausführungsform sieht vor, dass das Schätzverfahren weiter das Schätzen von Parametern umfasst. Die Parameter sind erforderliche Größen für die Parametrierung des Modells und damit für die Bestimmung beispielsweise des Temperaturprofils. Hier können als nicht beschränkende Beispiele als Parameter die Strömungsgeschwindigkeit des Fluids, die Dichte, das Volumen sowie der Druck des Wassers aufgeführt werden. Hierbei wird ein Modell mit einem verteilten Beobachter mit Parameterschätzer entworfen. Für den Schichtladespeicher wird dann neben dem verteilten Beobachter bzw. dem Filter ein Extended-(Unscented)-Kalman-Filter zusätzlich ein Parameterschätzer als alternativer Schätzalgorithmus entworfen. Dieser Parameterschätzer kann in dem Beobachter-/Filteralgorithmus direkt integriert ausgeführt sein oder auch separat ausgeführt werden.

Das Modell berechnet nun entsprechende Zustandsgrößen. Anhand gemessener Zustandsgrößen wird ein Korrekturterm ermittelt. Der Korrekturterm setzt sich aus dem Fehler zwischen den realen gemessenen Temperaturwerten im Speicher und entsprechenden geschätzten Temperaturwerten des Beobachters zusammen, wobei der damit ermittelte Beobachterfehler ermittelt wird. Dieses lässt sich mathematisch anhand der folgenden Gleichungen veranschaulichen. Das reale Temperaturprofil im Speicher ist T(z,t), das geschätzte Temperaturprofil lautet $\hat{T}(z, t)$. Die Gewichtung lautet $k^T(z,t)$.

Die Beobachtergleichung ergibt sich zu:

$$\frac{\partial \hat{T}}{\partial t} = f\left(\frac{\partial^2 \hat{T}}{\partial z^2}, \frac{\partial \hat{T}}{\partial z}, \hat{T}, u\right) + k^T(z,t)(y(t) - \hat{y}(t))$$

mit der Messgleichung des realen Systems

$$y(t) = [T(z_1,t), T(z_2,t), \ldots T(z_N,t)]^T, t \geq 0$$

und der Messgleichung des Beobachters

$$\hat{y}(t) = \left[\hat{T}(z_1,t), \hat{T}(z_2,t), \ldots \hat{T}(z_N,t)\right]^T$$

In dem Verfahren wird nun das Profil für den Beobachterfahler zwischen den Messstellen geeignet approximiert und die Gewichtung entsprechend ausgelegt.

Zur Ausführung des Verfahrens auf Recheneinheiten müssen die verteilt parametrischen Modelle nun entsprechend vereinfacht werden, das heißt, die partiellen Differenzialgleichungen müssen in gewöhnliche Differenzialgleichungen transformiert werden. Hierfür wird die Ortsdiskretisierung eingesetzt. Vorzugsweise wird hierfür ein "slope limiter" Verfahren verwendet, das eine genaue Nachbildung des realen Temperaturgradienten mit niedrig dimensionaler Ortsdiskretisierung ermöglicht.

Die Reihenfolge von Beobachterentwurf und Ortsdiskretisierung ist beliebig. Ein geeignetes Schätzverfahren ist jedes modellbasierte Schätzverfahren für nichtlineare konzentriert parametrische Systeme wie z. B. das allgemein bekannte Extended oder Unscented-Kalman-Filter Verfahren.

Für den Schätzalgorithmus muss eine Initialisierung stattfinden. Hierfür werden die zum Beispiel bei einem Einschaltzeitpunkt zur Verfügung stehenden Messwerte sowie Erfahrungswerte verwendet. Anhand dieses Anfangszustands wird nun das geschätzte Temperaturprofil durch den Beobachter so weit korrigiert, dass sich dies auf den tatsächlichen Wert der physikalischen Temperaturverteilung im Schichtladespeicher einschwingt, d. h. konvergiert.

Das Messen von messbaren Zustandsgrößen wird mittels für den zu messenden Zustand ausgelegten Sensoren durchgeführt. Dabei sind nur eine begrenzte Anzahl an Sensoren vorhanden, vorzugsweise zwischen einem und zehn, weiter bevorzugt zwischen einem und sieben, und am meisten bevorzugt zwischen einem und fünf Sensoren, wobei bevorzugt drei Sensoren verwendet werden.

Die Erfindung schließt weiter die technische Lehre ein, dass ein Regelungsverfahren zum Regeln eines Schichtladespeichers, insbesondere einer Zu- und Abfuhr oder der Erwärmung eines Fluids in einer Speicherzelle eines Schichtladespeichers vorgesehen ist, umfassend ein Verfahren zur Ermittlung eines nicht messbaren Zustandes gemäß einem der vorherigen Ansprüche. Mit diesem Regelverfahren lässt sich zum Beispiel die Wassertemperatur von Wasser in einer Speicherzelle einer Schichtladeeinrichtung optimal regeln.

Zudem sieht die technische Lehre ein Computerprogramm mit Programmcode-Mitteln vor, um alle Schritte von jedem beliebigen der Ansprüche durchzuführen, wenn das Programm auf einem Computer ausgeführt wird.

Auch sieht die technische Lehre ein Computerprogrammprodukt mit Programmcode-Mitteln vor, die auf einem computerlesbaren Datenträger gespeichert sind, um das Verfahren nach jedem beliebigen der Ansprüche durchzuführen, wenn das Programmprodukt auf einem Computer ausgeführt wird.

Auf diese Weise lässt sich dieses Verfahren auf vielfache Weise einsetzen und auf verschiedenen Recheneinheiten implementieren.

Die technische Lehre sieht weiterhin eine Schichtladespeichervorrichtung mit einer Speicherzelle für ein Fluid, insbesondere einer Speicherzelle für ein Heiz- oder Warmwassergerät vor, umfassend eine Regeleinrichtung mit Mitteln zur Ermittlung eines nicht messbaren Zustandes, insbesondere eines Beladungszustandes wie einem Temperaturprofil des Fluids in der Speicherzelle, nach einem der vorherigen Ansprüche.

Dabei ist bevorzugt, dass weiter umfasst ist: ein Leitungssystem, welches die Speicherzelle mit einer Brennereinrichtung über einen Wärmetaucher sowie mit einer Auslasseinrichtung fluidisch verbindet, mindestens eine Pumpeneinrichtung zum Fördern des Fluids durch das Leitungssystem und mindestens einen Wärmetauscher.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:

Fig. 1          schematisch einen Schichtladespeicher mit Peripherie,

Fig. 2          ein Funktionsschema gemäß einem Verfahren mit verteiltem Beobachter,

Fig. 3          einen Zustandsautomat zur Beschreibung der diskreten Dynamik eines Schichtladespeichers,

Fig. 4a bis 4c    verschiedene Diagramme zum Konvergenzverhalten eines Filters in der Simulation,

Fig. 5a bis 5d    verschiedene Diagramme zu Schätzergebnissen für die Messdaten und

Fig. 6          ein Diagramm zum Konvergenzverhalten eines Beobachters.

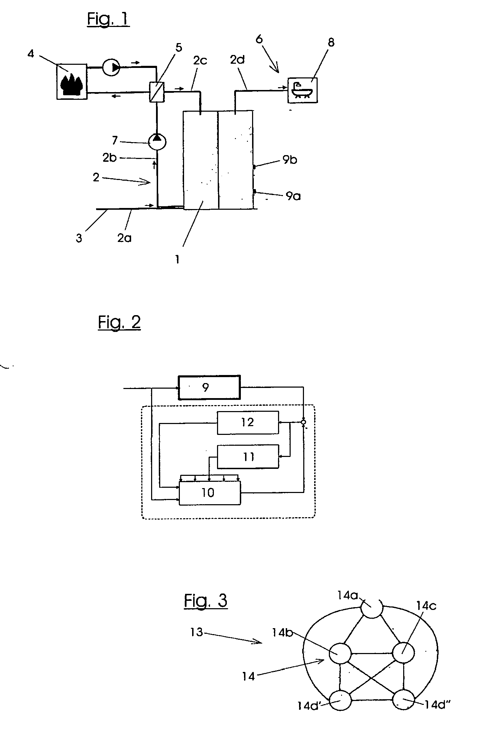

Fig. 1 zeigt schematisch einen Schichtladespeicher 1 mit umgebender Peripherie. Der Schichtladespeicher ist über ein Leitungssystem 2 mit einem Kaltwassereinlass 3, einer Brennereinrichtung 4 einschließlich eines Wärmetauschers 5 und einem Heißwasserauslass 6 gekoppelt. Über den Kaltwassereinlass 3 wird durch einen ersten Teil 2a des Leitungssystems 2 kaltes Wasser in den Speicher bzw. den Schichtladespeicher 1 zugeführt. Von dem Schichtladespeicher 1 wird über einen zweiten Teil 2b des Leitungssystems 2 das kalte Wasser mit Hilfe einer Ladepumpe 7 zu einem Wärmetauscher 5 geführt. In einem Kreislauf wird nun das kalte Wasser über einen Brenner erwärmt und das erwärmte Wasser über einen dritten Teil des Leitungssystem 2c zurück in den Schichtladespeicher geführt. Bei Bedarf wird über einen vierten Teil 2d des Leitungssystems 2 warmes Wasser zu dem Heißwasserauslass geführt und an einer Zapfstelle 8 abgezapft.

An dem Speicher sind zwei Temperatursensoren 9a und 9b auf unterschiedlichen Höhen angebracht, wobei der erste Temperatursensor 9a in Bodennähe an dem Speicher angebracht ist und der zweiter Temperatursensor 9b etwa in der Mitte zwischen Boden und oberem Teil des Speichers angebracht ist. Über diese Sensoren werden die messbaren Zustandsgrößen des Temperaturprofils des Wassers gemessen.

Fig. 2 zeigt ein Funktionsschema gemäß einem Verfahren mit verteiltem Beobachter. Dabei werden die an einer Messstelle real gemessenen Werte des Temperaturprofils des realen Prozesses (dargestellt bei 9) gemessen und mit Werten aus einem Simulator 10 verglichen. Aus diesem Vergleich wird ein Korrekturterm 11 berechnet und zusammen mit einem Korrekturwert aufgrund einer gemessenen Strömungsgeschwindigkeit bei 12 dem Simulator 10 zugeführt. Dieser simuliert nun mit den realen Werten, die ebenfalls in diesen Simulator 10 einfließen, neue Zustandswerte für den Vergleich mit den realen Werten. Über dieses Zustandsschätzverfahren nähert sich der geschätzte Zustand solange dem realen Zustand, bis die realen und die simulierten Werte übereinstimmen und somit die realen nicht messbaren Zustandswerte anhand des Modells bestimmt sind.

Fig. 3 zeigt schematisch einen Zustandsautomat 13 zur Beschreibung eines Schichtladespeichers. Der Zustandsautomat ist ein endlicher Zustandsautomat und stellt ein hybrides Modell, das heißt ein Modell mit diskreten Ereignissen und unterlagerter kontinuierlicher Dynamik, dar. Die Zustände 14 sind durch Kreise, die Übergänge durch die die Kreise verbindenden Linien dargestellt. Der Ruhezustand ist mit 14a, der Zapfungszustand mit 14b, der Beladungszustand mit 14c, der Mischzustand von Beladung und gleichzeitiger Zapfung mit 14d' bzw. 14d" dargestellt. Der Mischzustand, bei dem das Beladen größer als die Abzapfung ist, ist mit 14d' dargestellt und der Mischzustand, bei dem das Beladen kleiner als die Abzapfung ist, ist mit 14d" dargestellt. Die vorstehend in der Beschreibung aufgeführten Differenzialgleichungen beschreiben die unterlagerte kontinuierliche Dynamik dieses Zustandsautomaten.

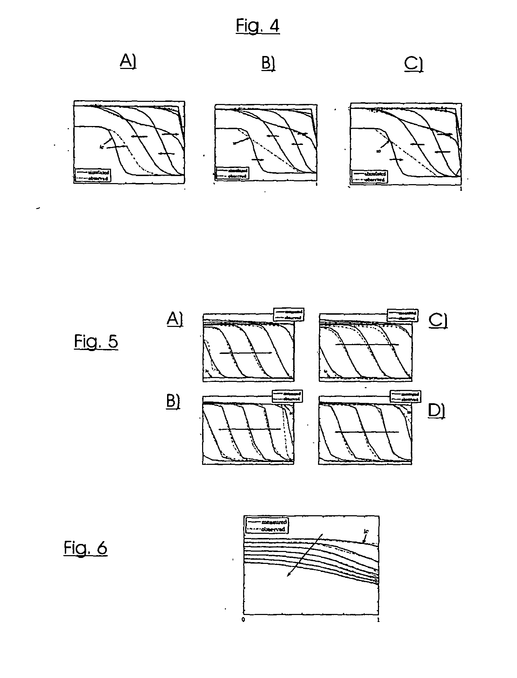

Fig. 4a bis 4c sind verschiedene Diagramme zum Konvergenzverhalten eines Filters in der Simulation. In den Diagrammen ist die Temperatur an der $\gamma$-Achse aufgetragen und die Höhe in z-Richtung auf der x-Achse. Somit ist die Temperatur des Fluids über die Höhe in der Speicherzelle aufgetragen. Die durchgezogenen Linien kennzeichnen einen simulierten Wert, also emulierten realen Wert, und die gestrichelten Linien einen beobachteten Wert. Die Temperaturwerte liegen in einem Bereich zwischen einer minimalen Temperatur Tmin und einer maximalen Temperatur Tmax. Die X-Achse ist normiert, so dass die maximale Höhe dem Wert 1 entspricht. Die Fig. 4a und 4b stellen das Konvergenzverhalten eines Unscented Kalman Filters für unterschiedliche Anfangsprofile dar und Fig. 4c stellt das Konvergenzverhalten eines verteilten Beobachters in der Simulation dar. Die in dem Speicher auftretende Strömungsrichtung des Fluids wird durch die entsprechenden Pfeile gekennzeichnet. Ein nach rechts weisender Pfeil kennzeichnet eine Beladung des Speichers, ein nach links weisender Pfeil eine Abzapfung. In den Diagrammen in Fig. 4 sind die diskreten Zustände "Laden" und "Abzapfen" dargestellt.

Fig. 5a bis 5d zeigen verschiedene Diagramme zu Schätzergebnissen für die Messdaten. Ähnlich zu Fig. 4 zeigen die Diagramme in Fig. 5 ebenfalls die Fälle einer Be- und Entladung der Speicherzelle. Fig 5a beschreibt das Ergebnis für ein Beladungsszenario, genauer das Aufladen des Speichers mit heißem Wasser. Fig. 5b beschreibt ein Ergebnis für eine Zapfung. Fig 5a und 5b sind mittels verteiltem Beobachter rekonstruiert. Fig 5c beschreibt ebenfalls das Ergebnis für ein Beladungsszenario, genauer das Aufladen des Speichers mit heißem Wasser und Fig. 5d beschreibt ein Ergebnis für eine Zapfung, beide diesmal rekonstruiert mittels eines Unscented Kalman Filters. Die x-Achse der Diagramme bildet jeweils die Höhe der Betrachtung ab und die y-Achse bildet jeweils die Temperatur in einem Bereich zwischen der minimalen Temperatur Tmin und der maximalen Temperatur Tmax ab. Die durchgezogene Linie kennzeichnet den jeweils gemessenen Wert, die gestrichelte Linie jeweils den simulierten Wert.

Fig. 6 zeigt ein Diagramm zum Konvergenzverhalten eines Beobachters. Das Konvergenzverhalten ist hier für den sogenannten "Auskühl"-Fall dargestellt, bei dem weder gezapft noch beladen wird. Der Pfeil in diesem Diagramm beschreibt das Fortschreiten der Zeit und der dabei erhaltenden Beobachterergebnisse.

Die x-Achse des Diagramms bildet die normierte Höhe der Betrachtung ab und die y-Achse bildet die Temperatur in einem Bereich zwischen der minimalen Temperatur Tmin und der maximalen Temperatur Tmax ab. Die durchgezogene Linie kennzeichnet den jeweils gemessenen Wert, die gestrichelte Linie jeweils den simulierten Wert.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

**Bezugszeichenliste**

| | |
|---|---|
| 1 | Schichtladespeicher |
| 2 | Leitungssystem |
| 2a | erster Teil (des Leitungssystems) |
| 2b | zweiter Teil (des Leitungssystems) |
| 2c | zweiter Teil (des Leitungssystems) |
| 2d | zweiter Teil (des Leitungssystems) |
| 3 | Kaltwassereinlass |
| 4 | Brennereinrichtung |
| 5 | Wärmetauscher |
| 6 | Heißwasserauslass |
| 7 | Ladepumpe |
| 8 | Zapfstelle |
| 9 | Prozess mit Messstellen |
| 9a, 9b | Temperatursensor |
| 10 | Simulator |
| 11 | Korrekturterm |
| 12 | Parameterschätzung / Korrekturwert Strömungsgeschwindigkeit |
| 13 | Zustandsautomat |

| 14 | Zustände |
|---|---|
| 14a | Ruhezustand |
| 14b | Zapfzustand |
| 14c | Beladungszustand |
| 14d', 14d" | Mischzustand |

**Patentansprüche**

1. Verfahren zur Ermittlung nicht messbar Zustände eines Systems, insbesondere eines verteilten Beladungszustandes einer mit einem Fluid zumindest teilweise befüllten Speicherzelle eines Schichtladespeichers (1), umfassend die Schritte:

   a) Abbilden des Systems, insbesondere des Schichtladespeichers (1), in einem Modell,
   b) Messen von messbaren Zustandsgrößen des Systems, insbesondere von messbaren Zustandsgrößen des in dem Schichtladespeicher (1) befindlichen Fluids,
   c) Bestimmen der nicht messbaren Zustände des Systems anhand des Modells und der gemessenen messbaren Zustandsgrößen, wobei
   das Bestimmen der nicht messbaren Zustände mittels einem Schätzverfahren erfolgt, in welchem ein Beobachter- oder Filterverfahren angewendet wird.

2. Verfahren nach Anspruch 1,
   **dadurch gekennzeichnet, dass** ein Beobachterentwurf für das Beobachterverfahren mit einem örtlich verteilten Modell für ein verteiltes System ausgeführt wird.

3. Verfahren nach Anspruch 1,
   **dadurch gekennzeichnet, dass** das Beobachterverfahren als ein Beobachterverfahren für ein konzentriertes System ausgeführt wird.

4. Verfahren nach einem der vorherigen Ansprüche 1 bis 3,
   **dadurch gekennzeichnet, dass** der Schritt c) eine Ortsdiskretisierung des örtlich verteilten Modells umfasst.

5. Verfahren nach einem der vorherigen Ansprüche 1 bis 4,
   **dadurch gekennzeichnet, dass** das Schätzverfahren weiter das Schätzen von Parametern umfasst.

6. Verfahren nach einem der vorherigen Ansprüche 1 bis 5,
   **dadurch gekennzeichnet, dass** der Schritt b) Messen von messbaren Zustandsgrößen mittels für den zu messenden Zustand ausgelegten Sensoren durchgeführt wird.

7. Verfahren nach einem der Ansprüche 1 bis 6,
   **dadurch gekennzeichnet, dass** ein Temperaturprofil eines Fluids in einer Speicherzelle eines Schichtladespeichers (1) ermittelt wird.

8. Regelungsverfahren zum Regeln eines Schichtladespeichers (1), insbesondere einer Zu- und Abfuhr oder Erwärmung eines Fluids in einer Speicherzelle eines Schichtladespeichers (1), umfassend ein Verfahren zur Ermittlung eines Zustandes gemäß einem der vorherigen Ansprüche 1 bis 6.

9. Computerprogramm mit Programmcode-Mitteln, um alle Schritte von jedem beliebigen der Ansprüche 1 bis 8 durchzuführen, wenn das Programm auf einem Computer ausgeführt wird.

10. Computerprogrammprodukt mit Programmcode-Mitteln, die auf einem computerlesbaren Datenträger gespeichert sind, um das Verfahren nach jedem beliebigen der Ansprüche 1 bis 8 durchzuführen, wenn das Programmprodukt auf einem Computer ausgeführt wird.

11. Schichtladespeichervorrichtung mit einer Speicherzelle für ein Fluid, insbesondere einer Speicherzelle für ein Heiz- oder Warmwassergerät, umfassend eine Regeleinrichtung mit Mitteln zur Ermittlung eines nicht messbaren Zustandes, insbesondere eines Beladungszustandes wie einem Temperaturprofil des Fluids in der Speicherzelle, nach einem der vorherigen Ansprüche 1 bis 6.

12. Schichtladespeichervorrichtung nach Anspruch 11, weiter umfassend:

ein Leitungssystem (2), welches die Speicherzelle mit einer Brennereinrichtung (4) über einen Wärmetauscher (5) sowie mit einer Auslasseinrichtung fluidisch verbindet,
mindestens eine Pumpeneinrichtung zum Fördern des Fluids durch das Leitungssystem (2) und
mindestens einen Wärmetauscher (5).

Fig. 1

Fig. 2

Fig. 3

Fig. 4

A)  B)  C)

Fig. 5

A)  C)

B)  D)

Fig. 6

**Europäisches**
**Patentamt**

# EUROPÄISCHER RECHERCHENBERICHT

Nummer der Anmeldung

EP 07 01 8244

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 99/41819 A (BOSCH GMBH ROBERT [DE]) 19. August 1999 (1999-08-19) * Zusammenfassung * * Seite 7, Zeilen 6-21 * | 1-10 | INV. G01K7/42 |
| A | ----- | 11,12 | |
| X | FR 2 878 619 A (RENAULT SAS [FR]) 2. Juni 2006 (2006-06-02) * Zusammenfassung * * Seite 2, Zeilen 11-31 * * Seite 3, Zeilen 17-19 * | 1-10 | |
| A | ----- | 11,12 | |
| X | US 4 420 032 A (VAN KOPPEN CHRISTIANUS W J [NL] ET AL) 13. Dezember 1983 (1983-12-13) * Zusammenfassung * * Spalte 12, Zeile 65 - Spalte 13, Zeile 24 * * Abbildung 8 * | 11,12 | |
| A | ----- | 1-10 | **RECHERCHIERTE SACHGEBIETE (IPC)** |
| A | US 4 737 917 A (PERRON RALF R [US]) 12. April 1988 (1988-04-12) * Spalte 1, Zeile 49 - Spalte 2, Zeile 27 * | 1,7,8 | G01K F28D H02H |
| A | ----- US 2005/018747 A1 (TAKEHARA NOBUYOSHI [JP]) 27. Januar 2005 (2005-01-27) * Zusammenfassung * * Anspruch 15 * ----- | 1 | |

Der vorliegende Recherchenbericht wurde für alle Patentansprüche erstellt

| Recherchenort | Abschlußdatum der Recherche | Prüfer |
|---|---|---|
| Den Haag | 18. Januar 2008 | de Bakker, Michiel |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
........................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 07 01 8244

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-01-2008

| Im Recherchenbericht angeführtes Patentdokument | | Datum der Veröffentlichung | Mitglied(er) der Patentfamilie | | Datum der Veröffentlichung |
|---|---|---|---|---|---|
| WO 9941819 | A | 19-08-1999 | DE | 19806135 A1 | 19-08-1999 |
| | | | EP | 0981851 A1 | 01-03-2000 |
| | | | JP | 2001526827 T | 18-12-2001 |
| FR 2878619 | A | 02-06-2006 | EP | 1861686 A1 | 05-12-2007 |
| | | | WO | 2006059031 A1 | 08-06-2006 |
| US 4420032 | A | 13-12-1983 | CA | 1195892 A1 | 29-10-1985 |
| | | | DE | 3176593 D1 | 11-02-1988 |
| | | | DK | 70681 A | 20-08-1981 |
| | | | EP | 0034396 A1 | 26-08-1981 |
| | | | ES | 8206817 A1 | 16-11-1982 |
| | | | JP | 56137043 A | 26-10-1981 |
| | | | NL | 8001008 A | 16-09-1981 |
| | | | PT | 72509 A | 01-03-1981 |
| US 4737917 | A | 12-04-1988 | DE | 3778772 D1 | 11-06-1992 |
| | | | EP | 0253546 A2 | 20-01-1988 |
| | | | ES | 2031897 T3 | 01-01-1993 |
| US 2005018747 | A1 | 27-01-2005 | KEINE | | |

EPO FORM P0461

Für nähere Einzelheiten zu diesem Anhang : siehe Amtsblatt des Europäischen Patentamts, Nr.12/82